# EUROPEAN PATENT APPLICATION

(11) **EP 4 224 008 A1**
(43) Date of publication of application: **09.08.2023**
(21) Application number: 22155164.1
(22) Date of filing: 04.02.2022
(51) Int. Cl.: F03D 1/06, F03D 80/10

(54) **WIND TURBINE COMPRISING COLORED ROTOR BLADES**

(71) Applicant: BASF SE, 67056 Ludwigshafen am Rhein (DE)
(72) Inventor: MEUER, Stefan, 67059 Ludwigshafen am Rhein (DE); SMARASON, Sigurdur Vidir, 67056 Ludwigshafen am Rhein (DE)
(74) Representative: BASF IP Association

(57) **Abstract**

The present invention relates to a wind turbine comprising a plurality of rotor blades, wherein (i) at least one rotor blade is provided with a light color which is based on a light pigment and at least one further rotor blade is provided with a non-light color, or (ii) wherein the plurality of rotor blades is provided with a non-light color, and wherein the non-light color is based on at least one non-light infrared transparent pigment and/or at least one non-light infrared reflective pigment.

## Description

The present invention relates to a wind turbine comprising a plurality of rotor blades, wherein (i) at least one rotor blade is provided with a light color (in particular a white or a substantially white color) and at least one further rotor blade is provided with a non-light (in particular a dark or even black) color or (ii) wherein the plurality of rotor blades is provided with a non-light (in particular a dark or even black) color.

### Prior art and objectives

Wind turbines and its use and fields of application in energy generation are well known in the art. One of the major challenges in the context of wind turbines and, in particular, rotor blades of such wind turbines, are erosive exposure. Erosive exposure is experienced in principle, by objects which, firstly, themselves are moved, and, secondly, by objects exposed to the influence of erosive substances. Fundamentally, erosion can be brought about by liquid or solid substances which are present themselves or dispersed or in solution in another gaseous or liquid medium (for example, air or water) and which are moved by that medium (for example, airborne sand, rain and/or hail).

In general terms the possibility exists of controlling wear protection, more particularly the erosion resistance, of objects by means of coatings on the surfaces of the objects. Important factors in obtaining effective erosion resistance are known to include a closely matched balance between flexibility or elasticity of the coating, on the one hand, and the hardness of the coating, on the other. Excessive hardness and/or inadequate elasticity tend to be detrimental to effective erosion resistance.

The prior art describes wind turbines and rotor blades, respectively, coated by means of the above-mentioned coatings and which provide for satisfying protection against erosion influences. Examples of such coatings and multilayer coating assemblies may be found in WO 2016/128166 A1 or WO 2016/000845 A1.

The described coatings of rotor blades, in particular topcoats (being visible for a viewer) are generally chosen in a way that they have a light color, in particular a white / substantially white color (for further definition of "light" and "white" and "substantially white" cf. below), i.e. the rotor blades are provided with a light or white or substantially white color. Accordingly, the major or even the total part of the visible surface of the rotor blade is colored lightly or white or substantially white. Reason is that by such color tones different advantages are brought together.

It is known that such color tones are based on pigments or pigment combinations which do neither absorb solar radiation in the visible electromagnetic radiation range to any major extent (a white and also a light color is direct result of respective reflection in this range), nor a significant amount of solar radiation in the infrared radiation range.

Accordingly, firstly, the rotor blades do not suffer from heating due to solar radiation and thus also not from respective material wear.

Secondly, it is known that inspection of rotor blades (required due to the already discussed erosion phenomenon and respective wear) nowadays is, as a standard, often conducted via drones equipped with cameras, in particular infrared cameras. An intensive heating of the rotor blade due to infrared radiation absorbance, quite obviously, would conflict with this thermographic analysis.

Therefore, while it is known to provide rotor blades with a partly non-light (for example a red color) in form of stripes making up an only small portion of the surface of the rotor blades in order warn humans / aircrafts, the major part of the surface is provided in light, in particular white or substantially white.

However, is has been identified that this form of color provision and realization is connected to one major drawback.

While humans / aircrafts like airplanes are effectively warned at least by means of the prementioned stripes, this does not apply for birds. The very fast rotational movement of the rotor blades in working mode leads to a visual blurring being not detected anymore by birds. If such stripes are completely omitted, the problem, quite obviously, is even bigger. Direct result of this is that birds often end up in the rotating parts of the rotor blades and suffer severe injuries or even death.

Roel May et al. (Ecology and Evolution. 2020;10:8927-8935) found that providing one rotor blade in black color, while the residual ones are provided in white, depict an effective warning also for birds, thus leading to a significantly decreased injury and death rate. Accordingly, providing the prementioned color combination provides not only an effective warning for humans and aircrafts, but also for birds. This is also true for rotor blades in working mode.

The drawback of this approach, however, lies in the spectral properties and respective consequences of the used black pigments. As is known, carbon black is the commonly applied black pigment serving for a very clear and dark black color shade. However, carbon black also does not only absorb solar radiation in the visible electromagnetic radiation range (the black color is direct result of respective absorption in this range), but also a significant amount of solar radiation in the infrared radiation range, more particularly in the near infrared range, i.e., the range from 800 to 2500 nm. As is also known, the total solar energy input that reaches the earth's surface originates to a major extent from radiation in the infrared range (approximately 58 %). Thus, in case objects or colored surfaces, respectively, absorb this radiation (and do not reflect it or are transparent for it) are heated significantly when being exposed to solar energy input. Therefore, a rotor blade provided in a black color, wherein the black color is based on carbon black, has the clear disadvantage of heating due to solar radiation absorption. In other words: The advantages described above for light, in particular white or substantially white colored surfaces turn out to be clear disadvantages in connection with these black surfaces.

Accordingly, there is a need for wind turbines bringing together the two above beneficial principles: Realizing a system in which the disadvantages of black surfaces being based on in particular carbon black are avoided and, concurrently, decreasing the risk for birds connected to rotor blades in working mode.

### Technical solution

It was found that the above objectives are solved by a wind turbine comprising a plurality of rotor blades, wherein (i) at least one rotor blade is provided with a light color which is based on a light pigment and at least one further rotor blade is provided with a non-light color, or (ii) wherein the plurality of rotor blades is provided with a non-light color, and wherein the non-light color is based on at least one non-light infrared transparent pigment and/or at least one non-light infrared reflective pigment.

The above defined subject-matter, i.e. wind turbine, brings together to beneficial principles: Realizing a system in which the disadvantages of black surfaces being based on in particular carbon black are avoided and, concurrently, decreasing the risk for birds connected to rotor blades in working mode.

### Detailed description:

Wind turbines and rotor blades of wind turbines, respectively, are known to the person skilled in the art.

The rotor blades may be composed of a very wide variety of materials and combinations of materials. Preferably, the rotor blades have substrates being based on plastics such as epoxy resin-based plastics, which may have been given glass fiber (GRP), aramid fiber (ARP) and/or carbon fiber (CRP) reinforcement or a natural fiber reinforcement with hemp or sisal, for example. Preferred are glass fiber-reinforced epoxy resin plastics as substrates.

The wind turbine of the invention comprises a plurality of rotor blades, i.e. at least two rotor blades. Preferably, the wind turbine comprises exactly three rotor blades.

According to a first embodiment (i) of the invention, at least one rotor blade is provided with a light color, in particular white color (including a substantially white color) and at least one further rotor blade is provided with a non-light color.

According to a second embodiment (ii) of the invention, the plurality of rotor blades is provided with a non-light color.

The term "provided with a color", quite obviously, means that a significant part, preferably the major part or even the total part of the surface of the rotor blade being visible for a viewer possesses the respective color. Of course, however, it is possible that a further, in particular minor portion of the surface possess a color being different from the main color. Overall, it is preferred, however, that the expression "provided with a color" means that at least 60 %, even more preferably at least 75 % or even at least 90 % of the surface of the rotor blade being visible for a viewer possesses the respective color.

Accordingly, the color of a significant part, preferably the major part of the surface of the rotor blades being visible for a viewer is light or white / substantially white for at least one blade and non-light for at least one further blade.

As known, the color of a colored surface, here the surface of rotor blade, is determined by pigments, more particularly the type of a pigment or a combination of different types and amounts of pigments.

As also known, a colored surface may be produced by application and curing of coating compositions comprising a type of pigment with the respective color or a combination of types and amounts of pigments resulting in the respective color. Thereby, it is also possible to produce more than one coating layer, i.e. a multicoat coating, whereby in this scenario at least the topcoat layer, i.e. the layer being visible for a viewer, possesses the respective color. In other words: Topcoat layer means that all of the further coating layers are disposed beneath the coating of the invention, and hence between the substrate (i.e. the to be coated surface) and the topcoat layer.

In a preferred embodiment of the present invention the rotor blades of the inventive wind turbine comprise at least one coating layer. In fact, it is even more preferred to have a multicoat (or multilayer) coatings established on the surface of the rotor blade as these multilayer coatings provide in an optimal way the technological properties required for rotor blades of wind turbines, in particular erosion resistance. Preferred multilayer coatings comprise at least one surfacer coat layer and at least one topcoat layer.

The coating compositions can be coated onto the substrates by established means of application and also cured (i.e. hardened) by likewise conventional means. Preferably, curing is possible at room temperature (i.e. 15 to 25°C), meaning that there is no need for explicit supply of heat, in other words thermal energy, as part of a complex equipment set-up, in order to produce a cured coating. Ultimately, therefore, from a coating produced initially by the application of the coating composition, a cured coating is preferably obtained by simple storage at room temperature. This, in particular, is relevant due to the fact that rotor blades have comparably large substrates, meaning that the dispensing on explicit heat supply by respective equipment is of significant advantage.

From the above it is evident that is preferred that the rotor blades of the inventive wind turbine comprise a topcoat layer, whereby the topcoat layer of each of the rotor blades has a respective color (as defined above).

As is also evident from the above, the topcoat layer is preferably produced by means of a coating composition being curable at not too high temperature, preferably a temperature of not more than 60°C, even more preferably 15 bis 25°C. Therefore, the coating composition from which the topcoat layer is produced preferably is a two-component coating composition. This means, as is known, that a first component (1) as described below (paint base component), and a second component (2) as described below (hardener component), are prepared and stored separately from one another and are not combined until shortly before application (due to limited processing time or pot life (in other words, the time within which the coating composition of the invention can be processed at room temperature (15 to 25°C, more particularly 20°C) without the increase in viscosity, as a result of corresponding crosslinking reactions at room temperature, for example, being so severe that application is no longer possible)).

By curing is meant the process known to the skilled person, in other words the conversion of a coating composition, applied as a film to a substrate, into the ready-to-use state, in other words, therefore, into a state in which the substrate provided with the coating in question can be transported, stored, and put to its intended use. This curing, in the context of the preferred two-component coating composition to be used for preparation of the topcoat layer, is accomplished more particularly by chemical reaction of reactive functional groups in the components present, which are present as binder constituents in the coating composition, more particularly in the paint base component and hardener com ponent.

The paint base component (1), preferably, comprises at least one functional binder constituent, preferably at least one hydroxy functional binder constituent. Examples of such constituents are polycarbonate diols and hydroxyl-containing acrylate resins, polyester resins and/or polyester acrylate resin. The at least one hydroxy functional binder constituent preferably possesses a hydroxyl number of 75 to 500 mg KOH/g (measured in accordance with DIN 53240). Particularly preferred hydroxy functional binder constituents are polycarbonate diols.

The preferred two-component coating composition contains, in the hardener component (2), at least one organic polyisocyanate.

Organic polyisocyanates are known to the person skilled in the art. These are aliphatic and aromatic components containing an average of more than one isocyanate group per molecule. It is possible to use the polyisocyanates that are known per se, such as aliphatic and aromatic polyisocyanates, more particularly diisocyanates and their dimers and trimers such as uretdiones and isocyanurates. Examples include hexamethylene diisocyanate, octamethylene diisocyanate, decamethylene diisocyanate, dodecamethylene diisocyanate, tetradecamethylene diisocyanate, trimethylhexane diisocyanate, tetramethylhexane diisocyanate, isophorone diisocyanate (IPDI), 2-isocyanatopropylcyclohexyl isocyanate, dicyclohexylmethane 2,4'-diisocyanate, dicyclohexylmethane 4,4'-diisocyanate, 1,4- or 1,3-bis(isocyanatomethyl)cyclohexane, 1,4- or 1,3- or 1,2-diisocyanatocyclohexane, and 2,4- or 2,6-diisocyanato-1-methylcyclohexane, the dimers and trimers thereof, and mixtures of these polyisocyanates. It is likewise possible to use the known polyester- or polyether-modified polyisocyanates, i.e. polyisocyanates obtainable by partial reaction of, for example, hydroxy-functional polyesters such as polylactone polymers or hydroxy-functional polyethers with said diisocyanates and/or dimers and/or trimers thereof.

Preference here is given to using the dimers and/or trimers of the stated diisocyanates that are known per se, i.e., in particular, the uretdiones and isocyanurates of the abovementioned diisocyanates, that are known per se and also available commercially.

The polyisocyanate possesses, for example an isocyanate content of 10% to 25%, preferably of 16% to 24%, especially preferably of 20% to 23.5%. In the context of the present invention, the isocyanate content is determined in accordance with DIN EN ISO 11909 by reaction of the respective sample with excess dibutylamine and back-titration of the excess with hydrochloric acid against bromophenol blue.

The coating composition may also comprise catalysts for the catalysis of the reaction of hydroxyl groups with isocyanate groups. Also, the coating material compositions of the invention may also further comprise other constituents different from the components already described. These constituents include, for example, typical coatings additives and solvents.

In order to produce a cured coating from the above-described coating composition, the applied coating composition is cured following application. Curing preferably takes place thermally. The coating composition applied, or the coating consisting of the composition, is preferably subjected to temperatures of not more than 80°C, preferably not more than 60°C. Particular preference is given to a temperature range from 15 to 60°C, very particularly from 15 to 50°C.

The period of time needed for complete curing may vary greatly according to the curing temperature selected, and is situated, for example, in the range from 30 minutes to 10 days. Curing may take place, for example, for a time of 30 minutes at 40°C to 60°C, or else at only 15 to 25°C for a time of 7 days.

The coatings may in each case have a dry film thickness of, for example, 100 to 500 µm, preferably from 150 to 400 µm.

As already described above and anyway known, the color of a colored surface, here the surface of rotor blade, may be determined by pigments. As also described above, a colored surface may be produced by application and curing of coating compositions comprising at least one type of pigment. Therefore, quite obviously, in the preferred embodiment of the invention where the inventive wind turbine comprises rotor blades which each posses at least one coating layer, more particularly a topcoat layer, the coating layer of each rotor blade comprises at least one type of pigment.

Pigments are known per se by the person skilled in the art. Known pigment are, for example, organic and inorganic, coloring and extender pigments. Examples of inorganic coloring pigments are white pigments such as titanium dioxide, zinc white, zinc sulfide, or lithopone; black pigments such as carbon black, iron manganese black or spinel black; chromatic pigments such as chromium oxide, chromium oxide hydrate green, cobalt green, or ultramarine green, cobalt blue, ultramarine blue, or manganese blue, ultramarine violet or cobalt violet and manganese violet, red iron oxide, cadmium sulfoselenide, molybdate red or ultramarine red; brown iron oxide, mixed brown, spinel phases, and corundum phases, or chromium orange; or yellow iron oxide, nickel titanium yellow, chromium titanium yellow, cadmium sulfide, cadmium zinc sulfide, chromium yellow, or bismuth vanadate. Examples of suitable organic coloring pigments are monoazo pigments, disazo pigments, anthraquinone pigments, benzimidazole pigments, quinacridone pigments, quinophthalone pigments, diketopyrrolopyrrole pigments, dioxazine pigments, indanthrone pigments, isoindoline pigments, isoindolinone pigments, azomethine pigments, thioindigo pigments, metal complex pigments, perinone pigments, perylene pigments, phthalocyanine pigments, or aniline black. Examples of suitable extender pigments or fillers are chalk, calcium sulfate, barium sulfate, silicates such as talc or kaolin, silicas, oxides such as aluminum hydroxide or magnesium hydroxide, or organic fillers such as textile fibers, cellulose fibers, polyethylene fibers, or polymer powders.

In the first embodiment (i) of the invention, which is the preferred embodiment, at least one rotor blade of the inventive wind turbine is provided with a light, in particular a white color (including a substantially white color), whereby the light color is based on a light pigment.

Light color is a term being known by the person skilled in the art. It is a color having a decent lightness, meaning, for example, that in comparison to the sky at standard weather conditions no significant contrast is existing. Within the CIELAB color space, as known, a maximum lightness is defined by L* = 100. A light color in the sense of the present application, quite obviously, does not necessarily need to have a L* value of 100 or near 100, but also L* values reflecting a color still assessed by a viewer as lightly. To put these circumstances into perspective of the CIELAB color space, it may be said that preferably the light color is defined by L* > 75, more preferably L* > 80, even more preferably L* > 85 or even L* > 90 or L* > 95, respectively.

Preferably, the at least one rotor blade is provided with a white color (including a substantially white color).

White color, including a substantially white color, also is a term being known by the person skilled in the art. White, quite obviously, does not only cover a pure white (in the sense of a L* = 100, a* = b* = 0 in the CIELAB color space, i.e. maximum lightness and fully achromatic), but also colors which do not have maximum lightness and which do have minor chromatic character, thus being colors which are still characterized as "white" or "whitish" by a viewer (for example a creamy white, warm white, a natural white or a light grey). This, quite obviously, is acknowledged in the definition "rotor blade is provided with a white color" (i.e. one white color selected from the range of existing white colors, meaning that of course more than one single white is existing) and also by the definition "substantially white". In fact, achieving a pure white (as defined above) is hardly possible, even by applying a pure white pigment (as defined above) for coloration.

To put these circumstances into perspective of the CIELAB color space, it may be said that preferably a white color is defined by L* > 90, a* < 10, b* < 10, more preferably by L* > 90, a* < 2, b* < 5, even more preferably L* > 95, a* < 2, b* < 5.

Accordingly, the light color, in particular white color may originate from a type of white pigment or a pigment combination (i.e. combination of types and amounts of pigments resulting in the respective color). Typical pigments which may be called white pigments are mentioned above. As is known, inherent property of such white pigments is that they are normally infrared reflective pigments. A preferred pigment in this regard is titanium dioxide. Typical pigment combinations leading to a light and in particular white color as defined above mainly contain such a white pigment, but also may comprise minor amounts of differently colored pigments like yellow, green, blue, red or black pigments.

Therefore, quite obviously, in the preferred embodiment of the invention where the inventive wind turbine comprises rotor blades with at least one coating layer, at least one of these coating layers comprises the above-mentioned type of pigment or pigment combination.

According to the first embodiment (i) of the invention, at least one rotor blade of the inventive wind turbine is provided with a non-light color, in particular a dark or even a black color. According to the second embodiment (ii) of the invention, the plurality of rotor blades is provided with a non-light color.

In line with what is elaborated on light colors above, non- light color is also a term being known by the person skilled in the art. It is a color having an observable darkness, meaning, for example, that in comparison to the sky at standard weather conditions an observable contrast is existing. Within the CIELAB color space, as known, a maximum darkness is defined by L* = 0. A non-light color in the sense of the present application, quite obviously, does not necessarily need to have a L* value of 0 or near 0, but also L* values reflecting a color still assessed by a viewer as dark. To put these circumstances into perspective of the CIELAB color space, it may be said that preferably the light color is defined by L* < 50, more preferably L* < 40, even more preferably L* < 35, respectively.

Preferably, the at least one rotor blade is provided with a dark color, even more preferably a black color.

Dark color also is a term being known by the person skilled in the art. Dark color means, preferably, that the color is defined by L* < 30, more preferably L* < 25, even more preferably L* < 20, or even L* < 15 or L* < 10, respectively.

A black color, again in line with what the person skilled in the art understands, quite obviously, does not only cover a pure black (in the sense of a L* = 0, a* = b* = 0 in the CIELAB color space, i.e. minimum lightness and fully achromatic), but also colors which do not have minimum lightness and which do have minor chromatic character, thus being colors which are still characterized as "black" by a viewer. This, quite obviously, is acknowledged in the definition "rotor blade is provided with a black color" (i.e. one black color selected from the range of existing black colors, meaning that of course more than one single black is existing). In fact, achieving a pure black (as defined above) is hardly possible, even by applying a pure black pigment for coloration.

To put these circumstances into perspective of the CIELAB color space, it may be said that preferably a black color is defined by L* < 25, a* < 20, b* < 20, more preferably L* < 25, a* < 15, b* < 15 or even L* < 20, a* < 15, b* < 15. More preferred embodiments may be described by L* < 15, a* < 15, b* < 15 or even L* < 10, a* < 10, b* < 10.

Regarding the non-light color, in particular dark or even black color, one crucial requirement has to be fulfilled.

According to the invention, the non-light color is based on at least one non-light infrared transparent pigment and/or at least one non-light infrared reflective pigment.

The expression "color is based on a pigment", quite obviously, is to be understood in a sense that the color mainly originates from this pigment or at least that the pigment, besides further potential pigments, has a decisive influence on the color. Therefore, the pigment is mainly or at least also responsible for the resulting color. However, quite self-explanatory, the color may also result from a pigment combination which may also comprise amounts of other pigments.

Quite obviously, in the preferred embodiment of the invention where the inventive wind turbine comprises rotor blades with at least one coating layer, at least one of these coating layers comprises the above-mentioned type of pigment or pigment combination.

The pigment on which the non-light color of the rotor blade is based is an infrared transparent pigment and/or at least one non-light infrared reflective pigment.

The terms "infrared transparent" and "infrared reflective" are to be understood, again, according to the general understanding of a person skilled in the art. Infrared radiation, in the sense of the present invention, is to be understood to cover the range from 800 to 2500 nm (also called near infrared range - NIR). As outlined in the introductory part, the major fraction of total energy input from solar radiation that reaches the earth originates from radiation in the infrared range (approximately 58 %), meaning that objects and surfaces absorbing infrared radiation heat up significantly. Consequently, surfaces and objects not or not substantially absorbing this radiation (but are transparent or reflective in this regard) do not heat at this level. Apparently, the terms "infrared transparent" and "infrared reflective" are again not to be understood as absolutes but mean that the respective pigments show infrared absorbance to a comparably low extent. In any case, the absorbance is significantly lower than for standard pigments being known to absorb infrared radiation (like, for example, carbon black). Therefore, an infrared transparent pigment may also be called substantially infrared transparent, while an infrared reflective pigment may also be called substantially infrared reflective.

Accordingly, the term "infrared transparent pigment" refers to a pigment that is substantially transparent in the relevant infrared wavelength region, namely 800 to 2500 Nanometers. For example, the average transmission (transparency or permeability) of the pigment in the infrared range (800 to 2500 nm) is at least 60 %, preferably at least 70 % or even at least 80 %. Therefore, the main part of the NIR radiation, i.e. the radiation in the wavelength region of 800 to 2500 nm, is transmitted by the respective pigment.

Non-limiting examples of suitable non-light infrared transparent pigments include, for example, copper phthalocyanine pigment, halogenated copper phthalocyanine pigment, anthraquinone pigment, quinacridone pigment, perylene pigment, monoazo pigment, disazo pigment, quinophthalone pigment, indanthrone pigment, dioxazine pigment, transparent iron oxide brown pigment, transparent iron oxide red pigment, cadmium orange pigment, ultramarine blue pigment, cobalt aluminate blue pigment, isoindoline pigment, brominated anthranthron pigment and the like.

Preferred infrared transparent pigments are, quite obviously and in line with what is described above, black infrared transparent pigments, in particular pigments comprising a perylene type structure (for example, Paliogen Black L 0086 from BASF or Sun Chemical).

With regard to the infrared transparent pigments, it is relevant to note that the rotor blade, in this scenario, will have infrared reflective means below the region where the infrared transparent region is comprised in. Reason is that, quite obviously, the transmitting infrared radiation must not be absorbed in any other region of the rotor blade (as this would again lead to heating), but needs to be reflected and, after having transmitted the infrared radiation transparent region for a second time, leave the rotor blade.

Therefore, in a preferred embodiment of the invention where the rotor blade is coated with coating layers and where the infrared transparent pigment is comprised in a coating layer, more specifically in the topcoat layer, the rotor blade comprises, below the coating layer comprising the infrared transparent pigment, a further region being infrared reflective. While this region could also be the core material (substrate) of the rotor blade, it is preferred that below the coating layer comprising the infrared transparent pigment a further coating layer being infrared reflective and thus containing infrared reflective pigments is situated (for example a surfacer coat). Preferred infrared reflective layers and pigments are light and in particular white layers containing white pigments, for example, titanium dioxide (being known to be a standard infrared reflective pigment and also as already described above).

The term "infrared reflective pigment", quite obviously, refers to a pigment that is substantially reflective in the relevant infrared wavelength region, namely 800 to 2500 nanometers. Therefore, the pigment, when included in a coating layer, provides within the layer a reflectance of infrared radiation greater than a coating layer deposited in the same manner from the same composition but without the infrared reflective pigment. Preferably, the term "infrared reflective pigment" (also covering a substantially infrared reflective pigment) includes that at least 25 % of the radiation in the wavelength region from 800 to 1600 nm is reflected by the respective pigment (which is, compared to standard pigments not being NIR reflective, a significantly higher fraction).

Besides the fact that the here discussed pigment needs to be infrared reflective, it also needs to be non-light (for a definition of "non-light" cf. above). Preferably, the pigment is of dark color, more preferably of black color. Accordingly, the pigment, quite obviously, is colored or even dark colored or black, meaning that the pigment absorbs significant amounts of radiation in the visible spectrum. This, evidently, is a clear difference to a standard infrared reflective (white) pigment like titanium dioxide (which, quite obviously, is reflective in the visible radiation range and thus not a "non-light" pigment).

Non limiting examples of non-light infrared reflective pigments are a variety of metals and metal alloys, inorganic oxides, and interference pigments. Exemplary colors include, for example, brown, as is the case with iron titanium brown spinel; green, as is the case with chromium oxide green; red, as is the case with iron oxide red; or blue and violet, as is the case with certain titanium dioxide coated mica flakes.

Preferred infrared reflective pigments are, quite obviously and in line with what is described above, dark or even black infrared reflective pigments. Non limiting examples of respective pigments are inorganic mixed metal oxide pigments, like iron manganese oxide pigments, chromium iron oxide pigments, chrome iron nickel spinel and/or iron chromium manganese oxide pigments. Respective pigments provide for a significant infrared reflectance and also for dark or even black shade color tones. Such pigments are commercially available, for example as Xfast Black 0095, Sicopal Black K 0095, Meteor Plus Black 9880 (BASF) or HEUCODUR IR Brown / HEUCODUR IR Black line / HEUCODUR IR Blue line (Heubach).

With regard to the infrared reflective pigments, it is relevant to note that the rotor blade, in this scenario, does not require any infrared reflective means below the region where the infrared reflective region is comprised in. Reason is that contrary to what is outlined above regarding the non-light infrared transparent embodiment, the infrared radiation is directly reflected, meaning that no other below region of the rotor blade is significantly affected by the infrared radiation.

Still, as it is generally preferred to have multicoat (or multilayer) coatings established on the surface of the rotor blades (the substrates) for further technological reasons (cf. introductory part), this principle is also preferred in the context of infrared reflective non-light pigments. However, in this embodiment there is no explicit demand in that below the coating layer comprising the non-light infrared reflective pigment a further coating layer being necessarily infrared reflective and thus containing infrared reflective pigments is situated (even if, quite obviously, this is not of any disadvantage).

As outline above, in a preferred embodiment of the present invention the rotor blades are coated with at least one coating layer, even more preferred with multicoat layers comprising a topcoat layer. Also, it is evident from the above that the color in which a rotor blade is provided preferably is achieved by means of such a coating layer, namely the upmost coating layer (which is the topcoat layer in a multicoat coating). Finally, as also outlined above, the respective coating layer comprises a respective pigment or pigment combination and this pigment or pigment combination, therefore, provides for the respective color of the rotor blade.

In a first preferred embodiment, the coating layer providing a non-light color of a rotor blade contains at least one non-light infrared transparent pigment and the coating layer has a permeability of at least 50 %, preferably of at least 60 % with respect to infrared radiation having a wavelength in the range of 800 to 1600 nm. More preferably, the coating layer contains less than 0.1 wt.-% of carbon black. Even more preferably, the coating layer is completely free of carbon black.

In a second preferred embodiment, the coating layer providing a non-light color of a rotor blade contains at least one non-light infrared reflective pigment and the coating layer has a reflectance of 25 % or more, preferably a reflectance of 50 % or more with respect to infrared radiation having a wavelength in the range of 800 to 1600 nm. Even more preferably, the coating layer additionally has a permeability (transparency) with respect to infrared radiation having a wavelength in the range of 800 to 1600 nm of 25 % or less. Preferably, the coating layer contains less than 0.1 wt.-% of carbon black. Even more preferably, the coating layer is completely free of carbon black.

While, quite obviously, the infrared permeability and/or reflectivity of a coating layer is to a major extent determined by the respective pigments (i.e. the infrared-transparent and/or infrared reflective pigments), also further components like further pigments and also resin components have an influence on the respective properties. Based on the above defined preferred properties and ranges, the person skilled in the art is able to produce respective coating compositions and thus coatings according to the given individual needs.

## Claims

1. Wind turbine comprising a plurality of rotor blades, wherein (i) at least one rotor blade is provided with a light color which is based on a light pigment and at least one further rotor blade is provided with a non-light color, or (ii) wherein the plurality of rotor blades is provided with a non-light color, and wherein the non-light color is based on at least one non-light infrared transparent pigment and/or at least one non-light infrared reflective pigment.

2. Wind turbine according to claim 1, wherein the rotor blades are each coated with at least one coating layer.

3. Wind turbine according to claim 2, wherein at least one coating layer of the rotor blade provided with a light color comprises at least one light pigment and at least one coating layer of the rotor blade provided with a non-light color comprises at least one non-light infrared transparent pigment and/or at least one non-light infrared reflective pigment.

4. Wind turbine according to any of claims 1 to 3, wherein the light pigment is an infrared reflective pigment.

5. Wind turbine according to any of claims 1 to 3, wherein the rotor blades are each coated with a multilayer coating comprising a topcoat layer.

6. Wind turbine according to claim 5, wherein the topcoat layers comprise the at least one light pigment and the at least one non-light infrared transparent pigment and/or at least one non-light infrared reflective pigment, respectively.

7. Wind turbine blade according to any of claims 1 to 6, wherein the light color in which at least one rotor blade is provided is a white color and wherein the non-light color in which at least one further rotor blade is provided is a dark, preferably black color.

8. Wind turbine blade according to claim 7, wherein the white color is defined by L* > 90, a* < 10, b* < 10, preferably by L* > 90, a* < 2, b* < 5, in accordance with the CIELAB color space.

9. Wind turbine blade according to claim 7 or 8, wherein the dark color is defined by L* < 30, preferably L* < 15, in accordance with the CIELAB color space and wherein the black color is defined by L* < 25, a* < 20, b* < 20, preferably by L* < 15, a* < 15, b* < 15, in accordance with the CIELAB color space.

10. Wind turbine blade according to any of claims 5 to 9, wherein the non-light color is based on a non-light infrared transparent pigment, wherein the non-light infrared transparent pigment is comprised in the topcoat layer and wherein below the topcoat layer a further coating layer is situated, whereby the further coating layer is infrared reflective and comprises at least one infrared reflective pigment.

11. Wind turbine blade according to claim 10, wherein the topcoat layer comprising the non-light infrared transparent pigment has a permeability of at least 50 %, preferably of at least 60 % with respect to infrared radiation having a wavelength in the range of 800 to 1600 nm.

12. Wind turbine blade according to claim 11, wherein the topcoat layer comprising the non-light infrared transparent pigment contains less than 0.1 wt.-% of carbon black.

13. Wind turbine blade according to any of claims 5 to 9, wherein the non-light color is based on a non-light infrared reflective pigment, wherein the non-light infrared reflective pigment is comprised in the topcoat layer.

14. Wind turbine blade according to claim 13, wherein the topcoat layer comprising the non-light infrared reflective pigment has a reflectance of 25 % or more, preferably a reflectance of 50 % or more with respect to infrared radiation having a wavelength in the range of 800 to 1600 nm.

15. Wind turbine blade according to claim 14, wherein the topcoat layer comprising the non-light infrared reflective pigment contains less than 0.1 wt.-% of carbon black.

16. Wind turbine blade according to any of claims 1 to 15, wherein at least one rotor blade is provided with a light color which is based on a light pigment and at least one further rotor blade is provided with a non-light color, and wherein the non-light color is based on at least one non-light infrared transparent pigment and/or at least one non-light infrared reflective pigment.
